# EUROPÄISCHE PATENTANMELDUNG

(11) **EP 4 016 811 A1**
(43) Veröffentlichungstag der Anmeldung: **22.06.2022**
(21) Anmeldenummer: 21215356.3
(22) Anmeldetag: 17.12.2021
(51) Int. Cl.: H02K 7/18, H02K 1/2791, H02K 1/18, H02K 1/14, H02K 21/22, H02K 15/02, H02K 15/03

(54) **STATORSEGMENT, ROTORSEGMENT UND GENERATOR SOWIE VERFAHREN**

(30) Priorität: 18.12.2020 DE 102020134188
(71) Anmelder: Wobben Properties GmbH, 26607 Aurich (DE)
(72) Erfinder: Giengiel, Wojciech, Aurich (DE); Feith, Manuel, Esens (DE); Jöckel, Stephan, Kleinniedesheim (DE); Recktenwald, Andreas, Saarbrücken (DE); Muik, Tobias, Bensheim (DE); Karapanahalli, Charan, Mannheim (DE); Vihriälä, Harri, Lilienthal (DE); Fischer, Lars, Norden (DE)
(74) Vertreter: Eisenführ Speiser

(57) **Zusammenfassung**

Die Erfindung betrifft ein Statorsegment (200) für einen segmentierten Stator, ein Rotorsegment (300) für einen segmentierten Rotor, ein Generatorsegment (10) für einen Generator, einen Generator (1) für eine Windenergieanlage, eine Windenergieanlage (100) und ein Verfahren zur Bereitstellung eines Generators (1). Insbesondere betrifft die Erfindung ein Statorsegment (200) für einen segmentierten Stator eines Generators (1) einer Windenergieanlage (100), umfassend einen Stator-Segmentträger (210) mit einer teilringförmigen Geometrie und einer Stator-Umfangsfläche (222), insbesondere einer Stator-Außenumfangsfläche, mindestens zwei an der Stator-Umfangsfläche (222), insbesondere an der Stator-Außenumfangsfläche, des Stator-Segmentträgers (210) angeordnete Spuleneinheiten (230, 232, 234), wobei die Spuleneinheiten (230, 232, 234) jeweils eine Spulenträgerplatte (231) und mindestens eine auf der Spulenträgerplatte (231) angeordnete Spule (260) aufweisen.

## Beschreibung

Die Erfindung betrifft ein Statorsegment für einen segmentierten Stator, ein Rotorsegment für einen segmentierten Rotor, ein Generatorsegment für einen Generator, einen Generator für eine Windenergieanlage, eine Windenergieanlage und ein Verfahren zur Bereitstellung eines Generators.

Windenergieanlagen sind grundsätzlich bekannt, sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten aerodynamischen Rotor einen Turm, auf dem die Gondel mit dem aerodynamischen Rotor um eine im Wesentlichen vertikal ausgerichtet Achse drehbar angeordnet ist.

Der aerodynamische Rotor wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor gekoppelt ist. Der elektrische Generator ist in der Gondel angeordnet und erzeugt elektrische Energie.

Windenergieanlagen können getriebelos oder mit einem Getriebe ausgeführt sein. Insbesondere getriebelose Windenergieanlagen weisen Generatoren mit einem großen Durchmesser auf. Diese Generatoren können als sogenannte Innenläufer oder als sogenannte Außenläufer ausgeführt sein. Bei einem Innenläufer ist der sich mit dem aerodynamischen Rotor rotierende elektrische Rotor des Generators innerhalb eines feststehenden Stators des Generators angeordnet. Bei einem Außenläufer ist der elektrische Rotor außerhalb des Stators angeordnet. Derartige Generatoren können eine Gesamtmasse von über 150 Tonnen erreichen. Neben den großen Abmessungen ist somit auch die Masse der Generatoren dafür verantwortlich, dass ein Transport des Generators mit einem hohen Aufwand verbunden ist. Daher werden segmentierte Generatoren eingesetzt, wobei der Rotor und/oder der Stator jeweils mehrere Bauteile aufweisen, die an dem Aufstellort der Windenergieanlage zusammengesetzt werden.

Das Zusammensetzen dieser trotz Segmentierung schweren Bauteile ist mit Herausforderungen verbunden. Einerseits ist das Bewegen der Bauteile auf der Baustelle schwierig und darüber hinaus ist das präzise Einstellen eines Luftspalts zwischen dem Rotor und dem Stator mit der erforderlichen Genauigkeit schwierig. Darüber hinaus ist die Wartungsmöglichkeit der bestehenden Lösungen eingeschränkt, sodass die Wartung häufig aufwendig und kostenintensiv ist.

Das Deutsche Patent- und Markenamt hat in der Prioritätsanmeldung zur vorliegenden Anmeldung folgenden Stand der Technik recherchiert: DE 10 2017 206 873 A1, DE 10 2015 212 453 A1, DE 10 2011 053 978 A1, US 2016/0 164 355 A1.

Es ist daher eine Aufgabe der vorliegenden Erfindung, ein Statorsegment für einen segmentierten Stator, ein Rotorsegment für einen segmentierten Rotor, ein Generatorsegment für einen Generator, einen Generator für eine Windenergieanlage, eine Windenergieanlage und ein Verfahren zur Bereitstellung eines Generators bereitzustellen, die einen oder mehrere der genannten Nachteile beseitigen oder vermindern. Insbesondere ist es eine Aufgabe der vorliegenden Erfindung, eine Lösung bereitzustellen, die eine bessere Transportierbarkeit und/oder einen reduzierten Montageaufwand und/oder eine bessere Wartbarkeit ermöglicht.

Gemäß einem ersten Aspekt wird diese Aufgabe gelöst durch ein Statorsegment für einen segmentierten Stator eines Generators einer Windenergieanlage, umfassend einen Stator-Segmentträger mit einer teilringförmigen Geometrie und einer Stator-Umfangsfläche, insbesondere einer Stator-Außenumfangsfläche, mindestens zwei an der Stator-Umfangsfläche, insbesondere an der Stator-Außenumfangsfläche, des Stator-Segmentträgers angeordnete Spuleneinheiten, wobei die Spuleneinheiten jeweils einen eine Spulenträgerplatte und mindestens eine auf der Spulenträgerplatte angeordnete Spule aufweisen.

Das Statorsegment ist insbesondere für einen segmentierten Stator eines Ringgenerators ausgebildet. Der segmentierte Stator eines solchen Ringgenerators weist in der Regel ebenfalls eine ringförmige Geometrie auf.

Der Stator-Segmentträger weist die teilringförmige Geometrie auf. Teilringförmig bedeutet insbesondere, dass dies ein Teil bzw. ein Abschnitt einer ringförmigen Geometrie ist. Beispielsweise kann die teilringförmige Geometrie des Stator-Segmentträgers eine Umfangserstreckung von 30 Bogengrad aufweisen. Durch die teilringförmige Geometrie weist der Stator-Segmentträger mindestens eine Stator-Umfangsfläche auf. Insbesondere kann der Stator-Segmentträger eine Stator-Außenumfangsfläche und/oder eine Stator-Innenumfangsfläche aufweisen.

Die Umfangsflächen werden in der Regel durch die teilringförmige Geometrie ausgebildet. Unter einer ringförmigen Geometrie ist, im vorliegenden Zusammenhang mit der teilringförmigen Geometrie, neben einem geometrischen Ring auch eine solche Geometrie zu verstehen, die ringähnlich ausgebildet ist. Beispielsweise kann der Querschnitt des segmentierten Stators auch polygonförmig ausgebildet sein. Hierfür kann beispielsweise der Stator-Segmentträger eine ebene Außenfläche aufweisen und derart ausgebildet sein, dass durch die Anordnung an weiteren Stator-Segmentträgern eine polygonale Geometrie des Stators ausgebildet wird. Eine solche soll auch unter einer ringförmigen, bzw. teilringförmigen Geometrie verstanden werden. Unter der Stator-Umfangsfläche ist insbesondere eine radiale Umfangsfläche zu verstehen. Darüber hinaus kann hierunter auch eine axiale Umfangsfläche verstanden werden.

An der Stator-Umfangsfläche sind die mindestens zwei Spuleneinheiten angeordnet. Eine Spuleneinheit weist eine Spulenträgerplatte und mindestens eine Spule auf. Die Spulenträgerplatte ist zur Anordnung der mindestens einen Spule ausgebildet. Die Spule ist insbesondere als Element zu verstehen, das ausgebildet ist, ein Magnetfeld zu erzeugen.

Der Erfindung liegt die Erkenntnis zugrunde, dass ein Generator einen segmentierten Stator aufweisen kann, wobei der segmentierte Stator die im Vorherigen genannten StatorSegmenten umfasst. Durch derartige Statorsegmente kann der Stator in vorteilhafter Weise am Aufstellort der Windenergieanlage montiert werden. Das Statorsegment kann mit einem im Folgenden noch näher erläuterten Rotorsegment ein Generatorsegment ausbilden. Infolgedessen kann das Generatorsegment mit dem im Vorherigen beschriebenen Statorsegment im Fertigungsbetrieb voreingestellt werden, insbesondere hinsichtlich eines Luftspalts zwischen den Spuleneinheiten und den im Folgenden noch näher erläuterten Magneteinheiten.

Darüber hinaus lag der Erfindung die Erkenntnis zugrunde, dass die Anordnung von mehreren Spuleneinheiten an einem Statorsegment eine verbesserte Wartungsfähigkeit ermöglicht. Derartige Spuleneinheiten weisen beispielsweise ein Gewicht von 800 kg auf, sodass deren Austauschbarkeit verbessert wurde und auch während der Fertigung eine verbesserte Montierbarkeit ermöglicht ist.

In einer bevorzugten Ausführungsvariante des Statorsegments ist vorgesehen, dass der Stator-Segmentträger an einer Stator-Trageinheit angeordnet ist, die ausgebildet ist, um das Statorsegment mit einem Statorgrundkörper zu verbinden, vorzugsweise schweißtechnisch zu verbinden, wobei vorzugsweise die Stator-Trageinheit eine Gitterstruktur umfasst oder als eine solche ausgebildet ist.

Der vorzugsweise nicht vom Statorsegment umfasste Statorgrundkörper ist zur Kopplung mit einem Maschinenträger einer Windenergieanlage ausgebildet. Der Statorgrundkörper kann im Betrieb des Statorsegments auch mit einem Lager gekoppelt sein, an dem auch ein Rotorgrundkörper angeordnet ist. Die Trageinheit ist vorzugsweise im Betrieb zwischen dem Statorgrundkörper und dem Statorsegment angeordnet, um das Statorsegment mit dem Statorgrundkörper zu verbinden.

Die Trageinheit kann auch als ein Statorarm bezeichnet werden. Die Stator-Trageinheit ist vorzugsweise als Gitterstruktur ausgebildet. Beispielsweise kann diese als dreidimensionale Gitterstruktur mit einem Hohlraum ausgebildet sein. Eine solche Stator-Trageinheit weist bei hoher Festigkeit ein vergleichsweise geringes Gewicht auf.

Es ist insbesondere bevorzugt, dass die Spuleneinheiten an der Stator-Außenumfangsfläche angeordnet sind und die Stator-Trageinheit an der Stator-Innenumfangsfläche befestigt ist. Beispielsweise kann diese Befestigung über eine Schraubverbindung oder auch schweißtechnisch erfolgen.

Es ist darüber hinaus bevorzugt, dass der Stator-Segmentträger aus Stahl besteht oder Stahl umfasst. Der Stator-Segmentträger kann beispielsweise zwei voneinander beabstandete Stator-Segmentbleche aufweisen. Diese voneinander beabstandeten Stator-Segmentbleche können mittels Streben miteinander verbunden sein. Die Streben bilden vorzugsweise die Stator-Außenumfangsfläche und/oder die Stator-Innenumfangsfläche aus.

Die Stator-Segmentbleche sind vorzugsweise so ausgebildet, dass diese mit einem benachbarten Stator-Segmentträger verbunden werden können. Die die Stator-Segmentbleche verbindenden Streben sind vorzugsweise voneinander beabstandet und/oder parallel zueinander ausgerichtet. Durch die Anordnung der Streben an den Stator-Segmentblechen bilden diese vorzugsweise eine gewölbte Stator-Außenumfangsfläche aus.

In einer weiteren bevorzugten Ausführungsvariante des Statorsegments ist vorgesehen, dass an dem Stator-Segmentträger zwischen zwei und vier, insbesondere drei, Spuleneinheiten angeordnet sind. Die Spuleneinheiten weisen vorzugsweise in Umfangsrichtung die gleiche Erstreckung auf. Beispielsweise können bei einem Statorsegment mit einer Umfangserstreckung von 30 Bogengrad insgesamt drei Spuleneinheiten angeordnet sein, die jeweils eine Umfangserstreckung von 10 Bogengrad aufweisen. Bei solchen Spuleneinheiten würde der vollständig montierte segmentierte Stator aus insgesamt zwölf Statorsegmenten mit insgesamt 36 Spuleneinheiten aufgebaut werden.

Die mindestens eine Spule je Spuleneinheit weist vorzugsweise eine rennbahnförmige Geometrie auf. Diese rennbahnförmige Geometrie zeichnet sich insbesondere durch zwei parallele Schenkel auf, an deren Ende jeweils ein halbkreisförmiger Abschluss zur Verbindung dieser Schenkel angeordnet ist. Orthogonal zu dieser Geometrie weist die Spule vorzugsweise eine Spulendicke auf. Die Spulendicke kann beispielsweise mehr als 50 mm, mehr als 75 mm, mehr als 100 mm, insbesondere 95 mm betragen. Die Beabstandung zwischen den Schenkeln kann beispielsweise mehr als 50 mm, mehr als 75 mm, mehr als 100 mm betragen. Orthogonal zu diesen im Vorherigen genannten Abmessungen kann die Spule beispielsweise mehr als 500 mm, mehr als 750 mm, mehr als 1000 mm oder mehr als 1100 mm betragen. Die Spulenträgerplatte kann darüber hinaus von der oder den Spulen selber ausgebildet werden.

Eine weitere bevorzugte Ausführungsvariante des Statorsegments zeichnet sich dadurch aus, dass mindestens eine der Spulen als eine Zahnspule ausgebildet ist, wobei vorzugsweise die Zahnspule Aluminium umfasst oder aus Aluminium besteht. Zahnspulen können beispielsweise auf die Spulenträgerplatte gesteckt werden und ermöglichen somit eine effiziente Montage.

In einer weiteren bevorzugten Fortbildung ist vorgesehen, dass der Stator-Segmentträger Durchbrüche aufweist und wobei vorzugsweise der Stator-Segmentträger eine Gitterstruktur aufweist. Die Durchbrüche des Stator-Segmentträgers können beispielsweise durch die im Vorherigen bereits erläuterten Stator-Segmentbleche und die diese verbindenden Stege realisiert werden. Darüber hinaus kann der Stator-Segmentträger auch als Gussteil bereitgestellt werden, welches die Durchbrüche beispielsweise in Form von Durchgangsöffnungen aufweist. Derartige Durchbrüche ermöglichen ein geringeres Gewicht des Stator-Segmentträgers. Insbesondere eine Gitterstruktur ermöglicht eine weitere Gewichtsreduzierung des Stator-Segmentträgers.

Gemäß einem weiteren Aspekt wird die eingangs genannte Aufgabe gelöst durch ein Rotorsegment für einen segmentierten Rotor eines Generators einer Windenergieanlage, umfassend einen Rotor-Segmentträger mit einer Rotor-Umfangsfläche, insbesondere einer Rotor-Innenumfangsfläche, einer Vielzahl an Magneteinheiten, die an der Rotor-Umfangsfläche, insbesondere an der Rotor-Innenumfangsfläche, des Rotor-Segmentträgers angeordnet sind.

Der Rotor-Segmentträger ist ausgebildet, um die Vielzahl an Magneteinheiten zu tragen. Insbesondere können diese an dem Rotor-Segmentträger angeordnet werden, beispielsweise mit diesem verbunden werden. Der Rotor-Segmentträger erstreckt sich vorzugsweise in einer Umfangsrichtung. Beispielsweise kann diese Erstreckung in Umfangsrichtung 30 Bogengrad betragen. Der Rotor-Segmentträger weist die Rotor-Umfangsfläche auf. Der Rotor-Segmentträger kann beispielsweise eine Rotor-Innenumfangsfläche und/oder eine Rotor-Außenumfangsfläche aufweisen. Die Rotor-Umfangsfläche wird vorzugsweise durch das Material des Rotor-Segmentträgers ausgebildet.

An der Rotor-Umfangsfläche, insbesondere an der Rotor-Innenumfangsfläche, ist die Vielzahl an Magneteinheiten angeordnet. Die Rotor-Umfangsfläche ist vorzugsweise eine geschlossene Fläche, die insbesondere durchbruchfrei ausgebildet ist. An dieser Rotor-Umfangsfläche können die Magneteinheiten in vorteilhafter Weise angeordnet werden. Vorzugsweise weisen die Magneteinheiten in Umfangsrichtung eine Erstreckung von 2,7 Bogengrad auf, sodass vorzugsweise insgesamt an dem segmentierten Rotor 132 Magneteinheiten nebeneinander angeordnet sind. Vorzugsweise sind insgesamt 264 Magneteinheiten angeordnet, da zusätzlich neben der nebeneinandergereihten Anordnung zwei Magneteinheiten übereinander, insbesondere in axialer Richtung, angeordnet sind. In einer bevorzugten Fortbildung des Rotorsegments ist vorgesehen, dass der Rotor-Segmentträger an einer Rotor-Trageinheit angeordnet ist, die ausgebildet ist, um das Rotorsegment mit einem Rotorgrundkörper zu verbinden, vorzugsweise schweißtechnisch zu verbinden, wobei vorzugsweise die Rotor-Trageinheit als eine Gitterstruktur ausgebildet ist.

Der Rotorgrundkörper ist vorzugsweise zur Kopplung mit einem aerodynamischen Rotor ausgebildet. Der Rotorgrundkörper und die Rotor-Trageinheit dienen somit vorzugsweise zur rotatorischen Kopplung des Rotorsegments mit dem aerodynamischen Rotor. Diese Kopplung dient dazu, dass bei Rotation des aerodynamischen Rotors eine Relativbewegung zwischen dem Rotor und dem Stator des Generators bewirkt wird. Durch eine Ausbildung der Trageinheit als Gitterstruktur wird eine weitere Gewichtsreduktion erreicht. Darüber hinaus wird das Trägheitsmoment des segmentierten Rotors reduziert.

In einer weiteren bevorzugten Fortbildung des Rotorsegments ist vorgesehen, dass die Rotor-Umfangsfläche des Rotor-Segmentträgers als eine im Wesentlichen geschlossene Fläche ausgebildet ist. Der Rotor-Segmentträger kann beispielsweise aus einem Blech ausgebildet werden. Das Blech weist vorzugsweise die geschlossene Fläche auf und zeichnet sich insbesondere dadurch aus, dass vorzugsweise keine Durchbrüche und/oder Öffnungen in der Rotor-Umfangsfläche sind. Auf der den Magneteinheiten abgewandten Seite des Rotor-Segmentträgers kann dieser Streben aufweisen, die der Verstärkung des Rotor-Segmentträgers dienen können und/oder zu dessen Befestigung ausgebildet sind.

Eine weitere bevorzugte Ausführungsvariante des Rotorsegments zeichnet sich dadurch aus, dass sich die Rotor-Umfangsfläche in einer Umfangsrichtung und einer axialen Richtung erstreckt, wobei mindestens zwei Magneteinheiten in axialer Richtung benachbart zueinander angeordnet sind.

Die axiale Richtung der Rotor-Umfangsfläche ist im Betrieb vorzugsweise im Wesentlichen parallel zur Rotationsachse des aerodynamischen Rotors. Durch die zwei in axialer Richtung benachbart zueinander angeordneten Magneteinheiten wird die Montierbarkeit des Rotorsegments weiter verbessert. Eine Magneteinheit weist vorzugsweise ein Gewicht von größer 25 kg, größer 50 kg oder 75 kg auf. Durch die derartige Segmentierung der Magnetelemente kann eine weitere Gewichtsersparnis und eine bessere Montierbarkeit ermöglicht werden. Darüber hinaus wird die Wartbarkeit des Generators mit einem solchen Rotorsegment verbessert.

In einer weiteren bevorzugten Fortbildung des Rotorsegments ist vorgesehen, dass eine, zwei, mehrere oder alle der Magneteinheiten als Permanentmagnet ausgebildet sind. Alternativ oder ergänzend kann bzw. können eine, zwei, mehrere oder alle der Magneteinheiten als Elektromagnet ausgebildet sein. Außerdem kann es bevorzugt sein, dass eine, zwei oder mehrere der Magneteinheiten ein magnetisierbares Material umfassen oder aus diesem bestehen.

Die als Permanentmagnet ausgebildeten Magneteinheiten können auch als permanenterregte Magneten bezeichnet werden. Diese zeichnen sich dadurch aus, dass diese unabhängig von externen Einflussgrößen ein Magnetfeld bilden. Elektromagneten hingegen zeichnen sich dadurch aus, dass diese ohne äußeren Einfluss kein oder ein geringfügiges Magnetfeld bereitstellen. Ein Elektromagnet kann beispielsweise aus einer Spule und einem innerhalb der Spule befindlichen Eisenkern bestehen. Der Elektromagnet weist ferner vorzugsweise einen elektrischen Anschluss an, sodass die Spule von einem Strom durchflossen werden kann.

Gemäß einem weiteren Aspekt wird die eingangs genannte Aufgabe gelöst durch ein Generatorsegment für einen Generator einer Windenergieanlage, umfassend ein Statorsegment nach einer der im Vorherigen beschriebenen Ausführungsvarianten und ein Rotorsegment nach einer der im Vorherigen beschriebenen Ausführungsvarianten, wobei vorzugsweise zwischen den Spuleneinheiten und den Magneteinheiten ein Luftspalt besteht und wobei ferner vorzugsweise das Statorsegment und das Rotorsegment relativ zueinander mittels mindestens eines Passstiftes fixiert sind.

Ein Generator umfasst in der Regel einen Rotor und einen Stator. Der Rotor kann sich relativ zu dem Stator rotatorisch bewegen. Zu diesem Zweck weist der Generator häufig ein Lager auf, an dem ein Statorgrundkörper und ein Rotorgrundkörper rotatorisch zueinander bewegbar angeordnet sind. Der Stator ist drehfest an einem Abschnitt der Gondel, beispielsweise einem Maschinenträger, angeordnet. Der Rotor lässt sich relativ zu der Gondel, beispielsweise zu dem Maschinenträger und zu dem Stator, drehen. Hierfür ist dieser in der Regel mit dem aerodynamischen Rotor gekoppelt.

Zwischen dem Stator und dem Rotor ist der Luftspalt vorgesehen. Der Rotor und der Stator sind somit im Wesentlichen nicht im unmittelbaren Kontakt miteinander. Ausgenommen hiervon können beispielsweise Stromübertragungselemente sein, die vorzugsweise durch Bürsten realisiert sein können. Der Luftspalt beschreibt insbesondere die Beabstandung des Rotors von dem Stator. Beispielsweise ist dies die Beabstandung in radialer Richtung zwischen dem Stator und dem Rotor. Je nach Bauweise kann dies jedoch auch die axiale Beabstandung zwischen Stator und Rotor sein. Es ist insbesondere bevorzugt, dass der Luftspalt einen konstanten Wert annimmt, um die Effizienz des Generators sicherzustellen. Die Einstellung des Luftspalts ist vorzugsweise auf zehntel Millimetergenau vorzunehmen.

Diese Einstellung des Luftspalts ist bei einem Generator von über 100 Tonnen Gewicht schwierig und aufwendig. Das Einstellen am Aufstellort der Windenergieanlage ist häufig langwierig und kann gegebenenfalls auch fehleranfällig sein. Das Einstellen des Luftspalts, beispielsweise in einer Montagehalle des Herstellers, hat Vorteile. Da der Generator jedoch nicht bei dem Hersteller vollständig montiert bleiben kann, da dieser in diesem Zustand nicht oder lediglich mit hohem Aufwand transportierbar ist, wurde die Einstellung des Luftspalts in der Vergangenheit am Aufstellort der Windenergieanlage vorgenommen.

Durch ein im Vorherigen beschriebenes Generatorsegment besteht nun die Möglichkeit, dass dieses mit dem vorgegebenen Luftspalt an dem Aufstellort der Windenergieanlage transportiert wird, dort montiert wird und der dadurch ausgebildete Generator den vorgegebenen Luftspalt aufweist. Infolgedessen ist die Einstellung des Luftspaltes am Aufstellort der Windenergieanlage im Wesentlichen nicht erforderlich.

Gemäß einem weiteren Aspekt wird die eingangs genannte Aufgabe gelöst durch einen Generator für eine Windenergieanlage, umfassend zwei oder mehr Statorsegmente nach einer der im Vorherigen beschriebenen Ausführungsvarianten und zwei oder mehr Rotorsegmente nach einer der im Vorherigen beschriebenen Ausführungsvarianten, wobei die Stator-Segmentträger und die Rotor-Segmentträger derart angeordnet sind, dass die Stator-Segmentträger und die Rotor-Segmentträger jeweils eine ringförmige Geometrie aufweisen, wobei sich zwischen den Spulen und den Magneteinheiten ein Luftspalt einstellt.

Die Stator-Segmentträger sind derart aneinander angeordnet, dass diese eine ringförmige Geometrie aufweisen. Analog hierzu sind die Rotor-Segmentträger derart angeordnet, dass diese ebenfalls eine ringförmige Geometrie aufweisen. Die Stator-Segmentträger und die Rotor-Segmentträger sind derart dimensioniert und/oder aneinander angeordnet, dass diese jeweils einen Ring ausbilden und der eine Ring innerhalb des anderen Ringes anordenbar ist.

Insbesondere ist es bevorzugt, dass der Generator als ein Außenläufer ausgebildet ist. Dies bedeutet insbesondere, dass die Stator-Segmentträger aneinander angeordnet einen Statorring ausbilden, der innerhalb eines Rotorrings angeordnet ist, der durch die Aneinanderanordnung der Rotor-Segmentträger ausgebildet ist. Im Betrieb des Generators rotiert somit der außerhalb des Stators angeordnete Rotorring. Zwischen den Spulen bzw. Spuleneinheiten und den Magneteinheiten stellt sich der Luftspalt ein. Dieser Luftspalt ist vorzugsweise konstant.

Die zwei oder mehr Statorsegmente sind vorzugsweise zu dem Statorring aneinander angeordnet. Die derart angeordneten Statorsegmente bilden vorzugsweise die Stator-Außenumfangsfläche aus. Die bestimmungsgemäß aneinander angeordneten Rotor-Segmentträger bilden vorzugsweise die Rotor-Innenumfangsfläche aus. Die Statorsegmente und die Rotorsegmente sind vorzugsweise derart aneinander angeordnet, dass die Stator-Außenumfangsfläche der Rotor-Innenumfangsfläche zugewandt ist.

Es ist bevorzugt, dass der Generator zwischen 8 und 14, vorzugsweise zwischen 10 und 12, Statorsegmente umfasst. Ferner ist es bevorzugt, dass der Generator zwischen 8 und 14, vorzugsweise zwischen 10 und 12, Rotorsegmente umfasst.

Eine bevorzugte Fortbildung des Generators sieht vor, dass die Anzahl an Statorsegmenten und Rotorsegmenten gleich ist und vorzugsweise jedem Statorsegment ein Rotorsegment zugeordnet ist, wobei ferner vorzugsweise jeweils ein Statorsegment und das zugeordnete Rotorsegment im Wesentlichen die gleiche Umfangserstreckung in Bogengrad aufweisen.

Durch die gleiche Anzahl an Statorsegmenten und Rotorsegmenten können in vorteilhafter Weise Generatorsegmente gebildet werden, aus denen der Generator zusammengesetzt ist. Alternativ kann auch ein Generatorsegment beispielsweise zwei Statorsegmente und ein Rotorsegment oder zwei Rotorsegmente und ein Statorsegment aufweisen. Insbesondere ist es bevorzugt, dass das Statorsegment und das Rotorsegment eine Umfangserstreckung zwischen 20 Bogengrad und 40 Bogengrad, insbesondere zwischen 25 Bogengrad und 35 Bogengrad, aufweist.

Eine weitere bevorzugte Fortbildung des Generators sieht vor, dass die zwei oder mehr Stator-Segmentträger an einem Statorgrundkörper angeordnet sind, wobei der Statorgrundkörper zur Kopplung mit einem Maschinenträger einer Windenergieanlage ausgebildet ist. Darüber hinaus kann es bevorzugt sein, dass die zwei oder mehr Rotor-Segmentträger an einem Rotorgrundkörper angeordnet sind, wobei der Rotorgrundkörper zur Kopplung mit einem aerodynamischen Rotor ausgebildet ist.

Es ist bevorzugt, dass der Statorgrundkörper und/oder der Rotorgrundkörper Ringscheiben-förmig ausgebildet sind, und vorzugsweise segmentiert ausgebildet sind, sodass zwei oder mehr Statorgrundkörpersegmente den Statorgrundkörper ausbilden und/oder sodass zwei oder mehr Rotorgrundkörpersegmente den Rotorgrundkörper ausbilden.

Darüber hinaus kann es bevorzugt sein, dass die zwei oder mehr Stator-Segmentträger jeweils eine Stator-Trageinheit aufweisen und die Stator-Trageinheiten mit dem Statorgrundkörper verbunden sind, vorzugsweise schweißtechnisch verbunden sind. Ferner ist es bevorzugt, dass die zwei oder mehr Rotor-Segmentträger jeweils eine Rotor-Trageinheit aufweisen und die Rotor-Trageinheiten mit dem Rotorgrundkörper verbunden sind, vorzugsweise schweißtechnisch verbunden sind.

In einerweiteren bevorzugten Fortbildung des Generators ist vorgesehen, dass dieser eine Lagereinheit umfasst, wobei an der Lagereinheit der Statorgrundkörper und/oder der Rotorgrundkörper derart angeordnet sind, sodass der Statorgrundkörper und der Rotorgrundkörper relativ zueinander drehbar sind. Die Lagereinheit weist vorzugsweise zwei relativ zueinander drehbare Lagerteile auf, wobei der Statorgrundkörper mit einem der zwei Lagerteile verbunden, vorzugsweise drehfest, ist und der Rotorgrundkörper mit dem anderen der zwei Lagerteile verbunden, vorzugsweise drehfest, verbunden ist.

Gemäß einem weiteren Aspekt wird die eingangs genannte Aufgabe gelöst durch eine Windenergieanlage, umfassend ein Statorsegment nach einer der im Vorherigen beschriebenen Ausführungsvarianten, und/oder ein Rotorsegment nach einer der im Vorherigen beschriebenen Ausführungsvarianten, und/oder ein Generatorsegment nach einer der im Vorherigen beschriebenen Ausführungsvarianten, und/oder einen Generator nach einer der im Vorherigen beschriebenen Ausführungsvarianten.

Gemäß einem weiteren Aspekt wird die eingangs genannte Aufgabe gelöst durch ein Verfahren zur Bereitstellung eines Generators an einem Aufstellort einer Windenergieanlage, umfassend die Schritte: Bereitstellen von zwei oder mehr Statorsegmenten nach einer der im Vorherigen beschriebenen Ausführungsvarianten, Bereitstellen von zwei oder mehr Rotorsegmenten nach einer der im Vorherigen beschriebenen Ausführungsvarianten, Anordnen und Befestigen der Statorsegmente zu einem Statorring und Anordnen und Befestigen der Rotorsegmente zu einem Rotorring, wobei die Spuleneinheiten den Magneteinheiten zugewandt sind und wobei vorzugsweise jeweils ein Statorsegment einem Rotorsegment zugeordnet ist, Einstellen eines Luftspalts zwischen dem Statorring und dem Rotorring, Demontage des Statorrings und des Rotorrings, wobei mindestens zwei Generatorsegmente montiert bleiben, die jeweils mindestens ein Statorsegment und ein Rotorsegment aufweisen und wobei jeweils die Beabstandung der Spuleneinheit zu der Magneteinheit eines jeden Generatorsegments im Wesentlichen unverändert bleibt, und Montage der Generatorsegmente an einem Aufstellort einer Windenergieanlage.

Das Verfahren und seine möglichen Fortbildungen weisen Merkmale bzw. Verfahrensschritte auf, die sie insbesondere dafür geeignet machen, für ein Statorsegment, ein Rotorsegment und/oder einen Generator und die jeweiligen Fortbildungen verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Statorsegments, des Rotorsegments, und/oder des Generators verwiesen.

Bevorzugte Ausführungsbeispiele werden exemplarisch anhand der beiliegenden Figuren erläutert. Es zeigen.
- Figur 1:: eine schematische, dreidimensionale Ansicht einer beispielhaften Ausführungsform einer Windenergieanlage;
- Figur 2:: eine schematische, dreidimensionale Ansicht einer beispielhaften Ausführungsform eines Generators;
- Figur 3:: eine schematische, dreidimensionale Detailansicht des in Figur 2 gezeigten Generators;
- Figur 4:: eine schematische, dreidimensionale Ansicht einer beispielhaften Ausführungsform eines Generatorsegments;
- Figur 5:: eine weitere dreidimensionale, schematische Ansicht des in Figur 4 gezeigten Generatorsegments;
- Figur 6:: eine schematische, dreidimensionale Ansicht einer beispielhaften Ausführungsform eines Statorsegments;
- Figur 7:: eine schematische, dreidimensionale Detailansicht des in Figur 6 gezeigten Statorsegments;
- Figur 8:: eine schematische, dreidimensionale Ansicht eines Stator-Segmentträgers;
- Figur 9:: eine schematische, dreidimensionale Ansicht einer beispielhaften Ausführungsform einer Spuleneinheit;
- Figur 10:: eine schematische, dreidimensionale Ansicht einer beispielhaften Ausführungsform einer Spule;
- Figur 11:: eine schematische, dreidimensionale Ansicht einer beispielhaften Ausführungsform eines Statorgrundkörpers;
- Figur 12:: eine schematische, dreidimensionale Ansicht einer beispielhaften Ausführungsform eines Rotorsegments;
- Figur 13:: eine schematische, dreidimensionale Detailansicht des in Figur 12 gezeigten Rotorsegments;
- Figur 14:: eine schematische, dreidimensionale Ansicht einer beispielhaften Ausführungsform eines Rotor-Segmentträgers;
- Figur 15:: eine schematische, dreidimensionale Ansicht einer beispielhaften Ausführungsform einer Magneteinheit;
- Figur 16:: eine schematische, dreidimensionale Ansicht einer beispielhaften Ausführungsform eines Rotorgrundkörpers;
- Figur 17:: eine schematische Ansicht einer beispielhaften Ausführungsform eines Lagers; und
- Figur 18:: eine schematische Ansicht eines Verfahrens.

In den Figuren sind gleiche oder im Wesentlichen funktionsgleiche bzw. -ähnliche Elemente mit den gleichen Bezugszeichen bezeichnet.

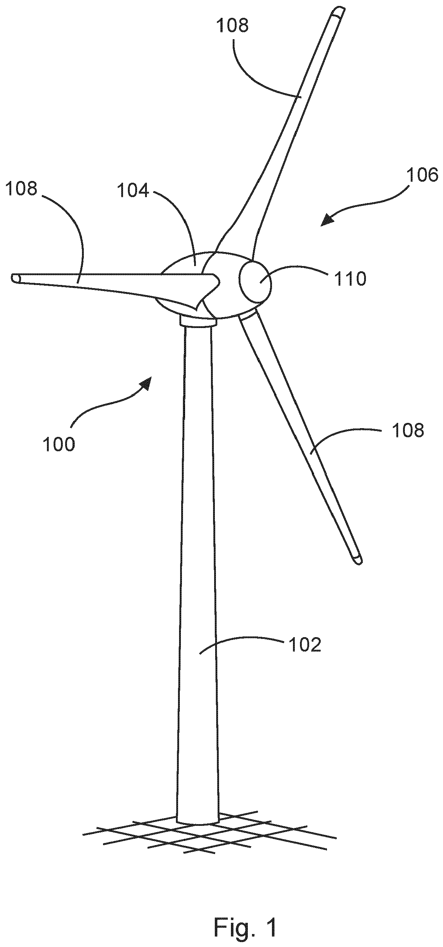

Figur 1 zeigt eine schematische, dreidimensionale Ansicht einer beispielhaften Ausführungsform einer Windenergieanlage 100. Die Windenergieanlage 100 weist einen Turm 102 und eine Gondel 104 auf dem Turm 102 auf. An der Gondel 104 ist ein aerodynamischer Rotor 106 mit Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder einen Läufer eines Generators, welcher direkt oder indirekt mit dem aerodynamischen Rotor 106 gekoppelt ist.

Der elektrische Generator ist in der Gondel 104 angeordnet und erzeugt durch die Relativbewegung zwischen einem Generatorrotor und einem Generatorstator elektrische Energie. Grundsätzlich bezieht sich alleinstehend der Begriff Rotor auf den elektrischen Rotor eines Generators, also einen Generatorrotor. Der aerodynamische Rotor 106 mit den Rotorblättern 108 wird stets als aerodynamischer Rotor bezeichnet.

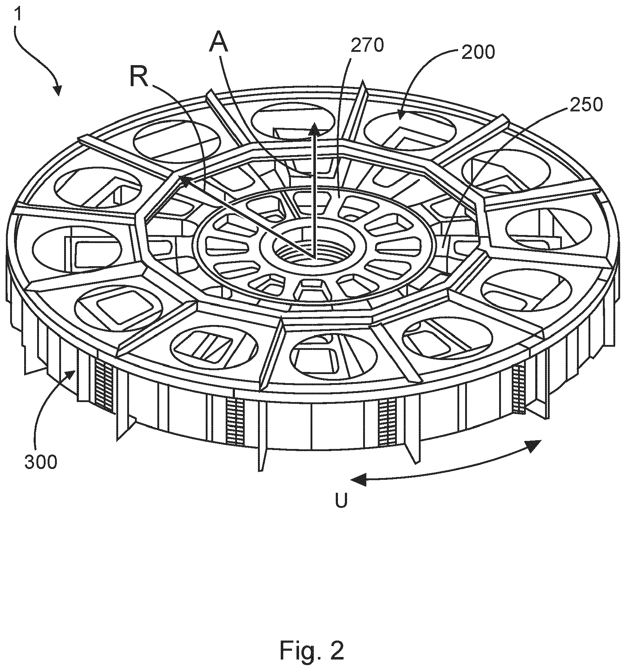

Figur 2 zeigt eine schematische, dreidimensionale Ansicht einer beispielhaften Ausführungsform eines Generators 1. Der Generator 1 erstreckt sich in Umfangsrichtung U, in radialer Richtung R und in axialer Richtung A. Im Betrieb rotiert der aus Rotorsegmenten 300 zusammengesetzte Rotorring um eine Rotationsachse, die parallel zur axialen Richtung A ausgerichtet ist. Der aus Statorsegmenten 200 zusammengesetzte Statorring ist relativ zu dem Rotorring im Betrieb fest angeordnet. Diese feste Anordnung des Statorrings erfolgt durch den Statorgrundkörper 270, der beispielsweise an einem Maschinengestell der Windenergieanlage 100 befestigt ist. Zwischen dem Statorgrundkörper 270 und einem im Folgenden noch näher erläuterten Rotorgrundkörper ist eine Lagerung vorgesehen, sodass der Rotorring relativ zu dem Statorring drehbar ist.

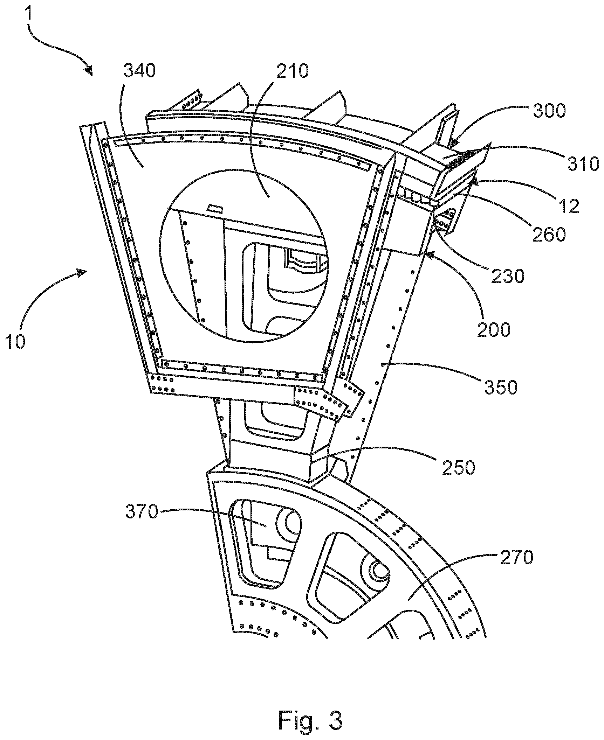

Figur 3 zeigt eine schematische, dreidimensionale Detailansicht des in Figur 2 gezeigten Generators. Das Generatorsegment 10 umfasst das Statorsegment 200 und das Rotorsegment 300. Das Statorsegment 200 und das Rotorsegment 300 sind voneinander beabstandet, sodass sich zwischen diesen ein Luftspalt 12 einstellt. Das Statorsegment 200 ist mittels einer Stator-Trageinheit 250 an dem Statorgrundkörper 270 angeordnet. Die Stator-Trageinheit 250 ist als Gitterstruktur ausgebildet und schweißtechnisch an dem Statorgrundkörper 270 befestigt.

Das Rotorsegment 300 ist mit einer Rotor-Trageinheit 350 an dem Rotorgrundkörper 370 angeordnet. Der Rotorgrundkörper 370 ist mit dem Statorgrundkörper 270 rotatorisch bewegbar gekoppelt. Dies kann beispielsweise mittels eines Lagers erfolgen. Das Statorsegment 200 weist den Stator-Segmentträger 210 auf. An dem Stator-Segmentträger 210 ist die Spuleneinheit 230 angeordnet. Die Spuleneinheit 230 weist die Spule 260 und die im Folgenden noch erläuterte Spulenträgerplatte 231 auf. Zur Versteifung des Rotorrings ist an dem Rotorsegment 300 ein Versteifungsblech 340 angeordnet.

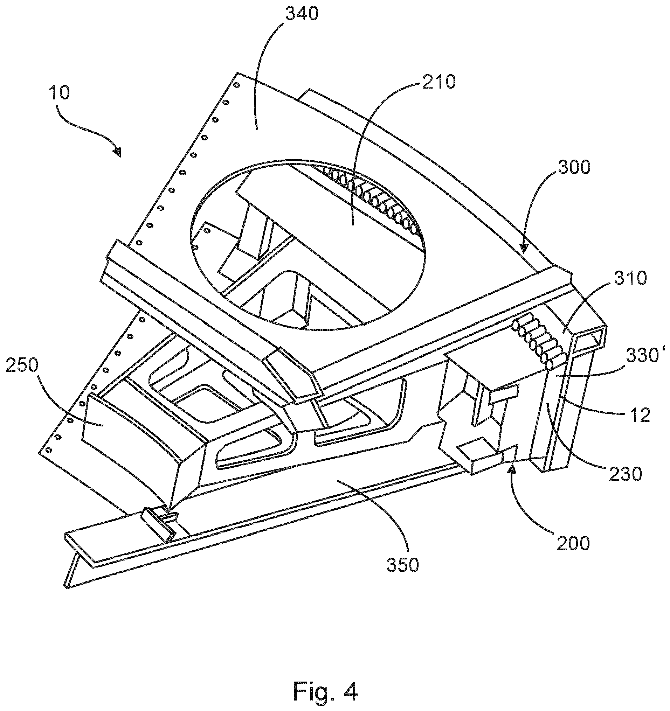

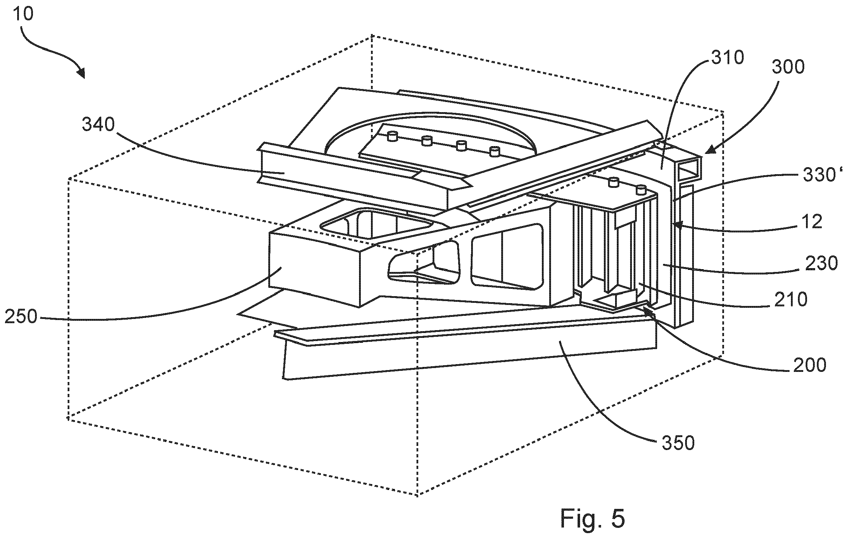

In den Figuren 4 und 5 ist die Gitterstruktur der Stator-Trageinheit 250 ersichtlich. Mit der insbesondere in Figur 5 gezeigten Stoßfläche der Stator-Trageinheit 250 wird diese schweißtechnisch an dem Statorgrundkörper 270 befestigt. Das derart zusammengesetzte Generatorsegment 10 weist vorzugsweise Befestigungselemente auf, sodass dieses mit im Wesentlichen gleichbleibendem Luftspalt 12 transportiert werden kann. Die derart zusammengesetzten Generatorsegmente 10 können dann am Aufstellort einer Windenergieanlage 100 aneinander angeordnet werden und somit einen Generator 1 ausbilden. Eine zusätzliche Einstellung des Luftspalts 12 entfällt somit, da dieser bereits zuvor eingestellt wurde.

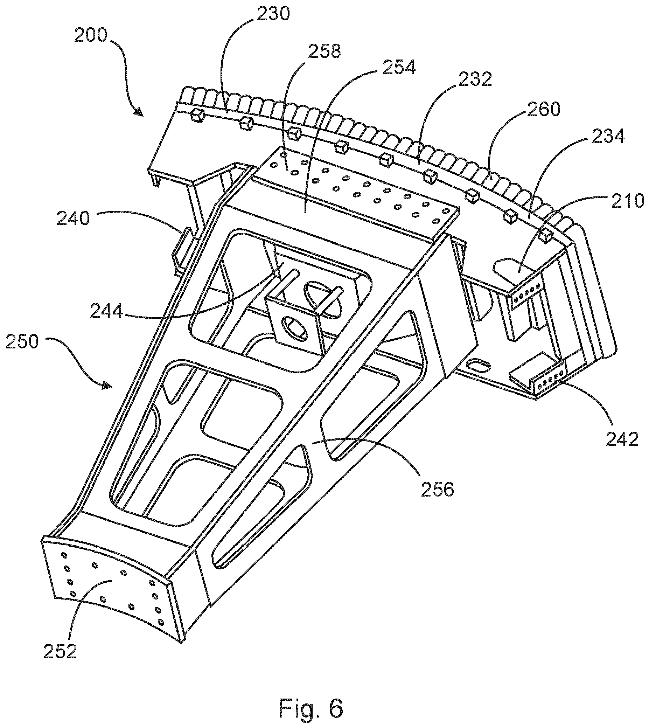

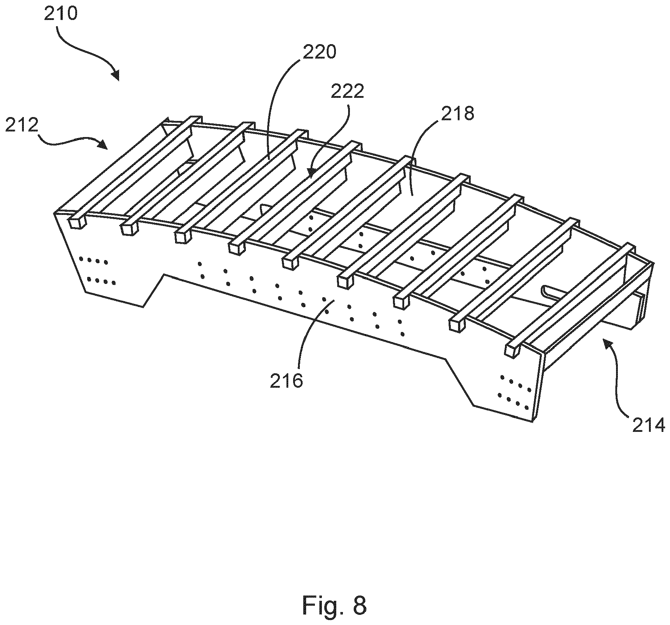

Figur 6 zeigt eine schematische, dreidimensionale Ansicht einer beispielhaften Ausführungsform eines Statorsegments 200. Das Statorsegment 200 umfasst den Stator-Segmentträger 210 mit der in Figur 8 gezeigten Stator-Außenumfangsfläche 222. An der Stator-Außenumfangsfläche 222 sind eine erste Spuleneinheit 230, eine zweite Spuleneinheit 232 und eine dritte Spuleneinheit 234 angeordnet. An den Spuleneinheiten 230, 232, 234 sind eine Vielzahl an Spulen angeordnet, wobei stellvertretend für alle Spulen eine Spule mit dem Bezugszeichen 260 versehen ist. Der Stator-Segmentträger weist Flanschelemente 240, 242 auf, die angeordnet und ausgebildet sind, um den Stator-Segmentträger 210 mit benachbarten Stator-Segmentträgern von benachbarten Statorsegmenten zu verbinden.

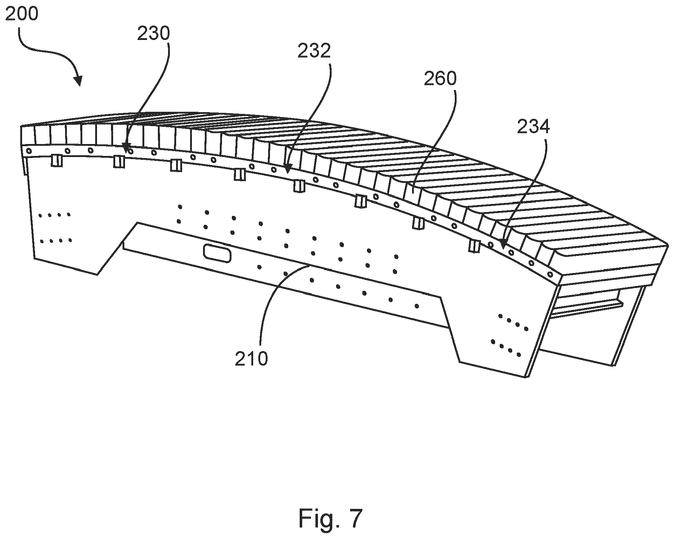

Auf der den Spuleneinheiten 230, 232, 234 abgewandten Seite des Stator-Segmentträgers 210 ist die Stator-Trageinheit 250 angeordnet. Die Stator-Trageinheit 250 ist mit einem Verbindungselement 258 mit dem Stator-Segmentträger 210 verbunden. Die Stator-Trageinheit 250 weist hierfür einen distalen Flansch 254 auf, mit dem dieser an dem Stator-Segmentträger 210 angeordnet ist. Auf der gegenüberliegenden Seite weist die Stator-Trageinheit 250 einen proximalen Flansch 252 auf. Dieser Flansch ist so angeordnet und ausgebildet, dass mit diesem Flansch 252 eine Verbindung mit einem Statorgrundkörper 270, insbesondere schweißtechnisch, ermöglicht wird. Die Stator-Trageinheit 250 weist eine Gitterstruktur 256 auf. Hierfür weist die Stator-Trageinheit 250 Gitterstreben auf. Figur 7 zeigt eine schematische, dreidimensionale Detailansicht des in Figur 6 gezeigten Statorsegments 200. Der Stator-Segmentträger 210 weist auf der insbesondere in Figur 8 gezeigten Stator-Außenumfangsfläche 222 die drei Spuleneinheiten 230, 232, 234 auf. Die Stator-Außenumfangsfläche 222 wird durch eine Vielzahl von Konturstreben 220 ausgebildet. Die Konturstreben 220 erstrecken sich zwischen einer ersten Statorträgerplatte 216 und einer zweiten Statorträgerplatte 218. Die Statorträgerplatten 216, 218 sind in axialer Richtung voneinander beabstandet und im Wesentlichen flächenparallel angeordnet.

Auf der der Stator-Außenumfangsfläche 222 zugewandten Seite weisen die Statorträgerplatten 216, 218 eine gewölbte Kontur auf, die die gewölbte Stator-Außenumfangsfläche 222 mit ausbilden. Der Stator-Segmentträger 210 erstreckt sich von einem ersten Ende 212 zu einem zweiten Ende 214. Zwischen diesen Enden 212, 214 erstrecken sich die Segmentträgerplatten 216, 218 mit ihrer Haupterstreckungsrichtung. Orthogonal hierzu erstrecken sich die Konturstreben 220 zwischen den Statorträgerplatten 216, 218.

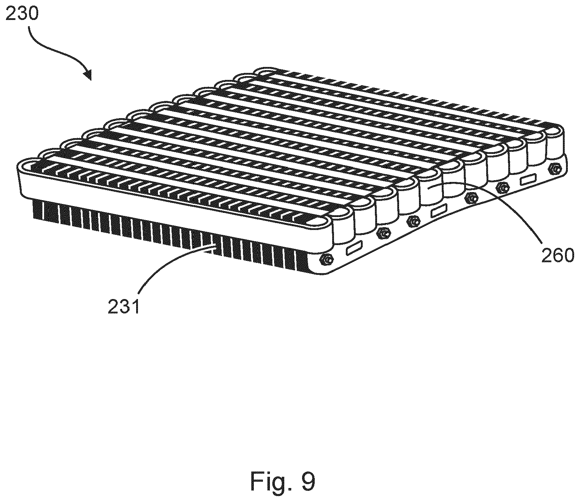

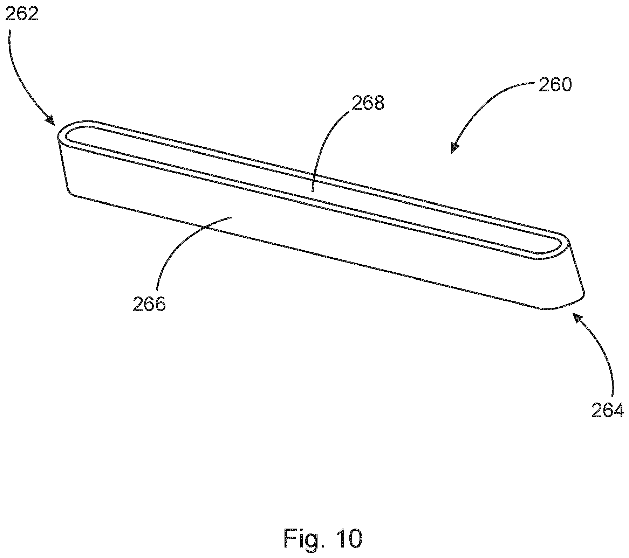

Figur 9 zeigt eine schematische, dreidimensionale Ansicht einer beispielhaften Ausführungsform einer Spuleneinheit 230. Die Spuleneinheit 230 weist insgesamt 12 Spulen 260 auf, die parallel zueinander an der Spulenträgerplatte 231 angeordnet sind. Die in Figur 10 gezeigte Spule 260 erstreckt sich von einem ersten Spulenende 262 zu einem zweiten Spulenende 264. Zwischen diesen Enden 262, 264 erstreckt sich die Spule mit einem ersten und einem zweiten Spulenschenkel 266, 268. An den Enden 262, 264 ist die Spule halbkreisförmig ausgebildet, wobei eine halbkreisförmige Kontur jeweils die Enden der zwei Spulenschenkel 266, 268 miteinander verbindet.

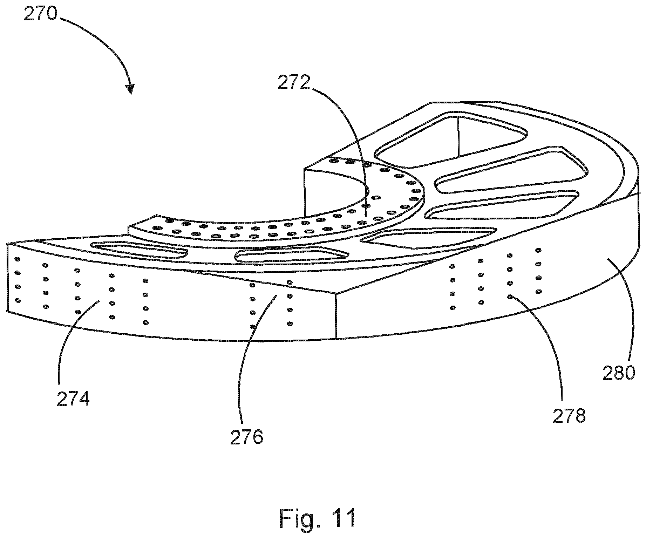

Figur 11 zeigt eine schematische, dreidimensionale Ansicht einer beispielhaften Ausführungsform eines Statorgrundkörpers 270. Der Statorgrundkörper 270 weist einen inneren Statorflansch 272 auf, der angeordnet und ausgebildet ist, um den Statorgrundkörper 270 mit einem Maschinenträger zu verbinden. An der radialen Außenumfangsfläche weist der Statorgrundkörper 270 die Verbindungsstellen 274 bis 280 auf. Die Verbindungsstellen 274 bis 280 sind jeweils dafür angeordnet und ausgebildet, damit an diesen eine Stator-Trageinheit 250 jeweils schweißtechnisch angeordnet werden kann.

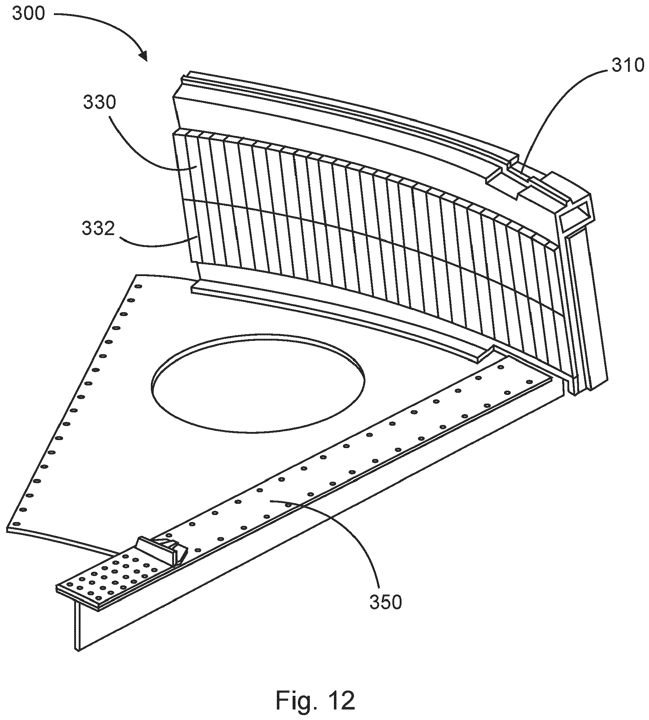

Figur 12 zeigt eine schematische, dreidimensionale Ansicht einer beispielhaften Ausführungsform eines Rotorsegments 300. Das Rotorsegment 300 weist den Rotor-Segmentträger 310 auf. An dem Rotor-Segmentträger 310 ist eine Vielzahl an Magneteinheiten 330, 332 an der Rotor-Innenumfangsfläche angeordnet. Durch diese Anordnung der Magneteinheiten 330, 332 an der Rotor-Innenumfangsfläche des Rotor-Segmentträgers 310 sind diese korrespondierend zu den Spuleneinheiten 230, 232, 234 des Statorsegments 200 angeordnet.

Das Rotorsegment 300 weist ferner eine Rotor-Trageinheit 350 auf, die angeordnet und ausgebildet ist, um das Rotorsegment 300 mit einem Rotorgrundkörper 370 zu verbinden. Zur Erhöhung der Festigkeit des Rotorsegments 300 ist zwischen der Rotor-Trageinheit 350 und dem Rotor-Segmentträger 310 ein Versteifungsblech 340 angeordnet.

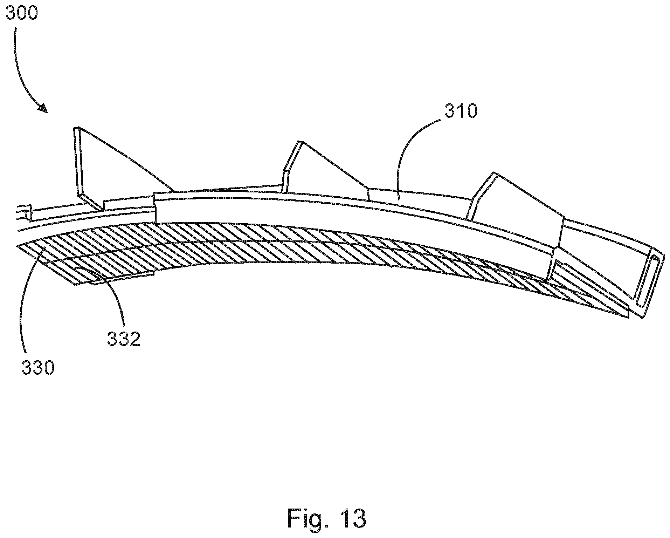

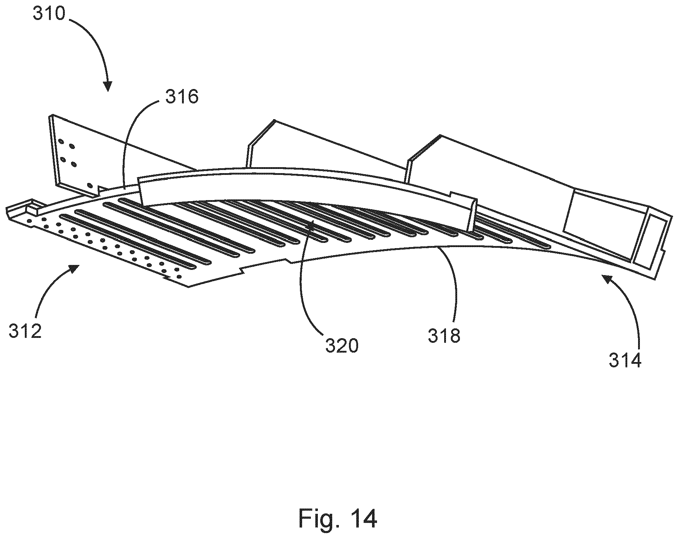

Figur 13 zeigt eine schematische, dreidimensionale Detailansicht des in Figur 12 gezeigten Rotorsegments 300. Insbesondere der Figur 14 ist zu entnehmen, dass der Rotor-Segmentträger 310 sich von einem ersten Ende 312 hin zu einem zweiten Ende 314 erstreckt. Orthogonal zu dieser gewölbten Erstreckung zwischen dem ersten Ende 312 und dem zweiten Ende 314 erstreckt sich der Rotor-Segmentträger 310 von einer ersten Kante 316 hin zu einer zweiten Kante 318. Die Umfangsrichtung beim Rotor-Segmentträger 310 ist entlang der Umfangsfläche zwischen dem ersten Ende 312 und zweiten Ende 314 ausgerichtet. Die axiale Richtung des Rotor-Segmentträgers 310 ist zwischen der ersten Kante 316 und der zweiten Kante 318 gerichtet. Insbesondere in der Figur 13 ist gezeigt, dass die zwei Magneteinheiten 330, 332 in axialer Richtung benachbart zueinander angeordnet sind.

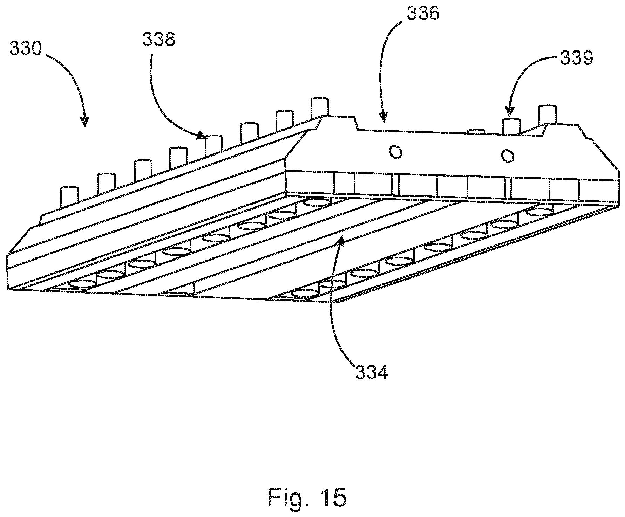

Figur 15 zeigt eine schematische, dreidimensionale Ansicht einer beispielhaften Ausführungsform einer Magneteinheit 330. Die Magneteinheit 330 weist eine Magnetvorderfläche 334 auf, die im bestimmungsgemäßen Betrieb des Rotorsegments den Spuleneinheiten 230, 232, 234 zugewandt ist. An der Magnethinterfläche 236 ist eine erste Befestigungsreihe 338 und eine zweite Befestigungsreihe 339 vorgesehen. Die Befestigungsreihen 338, 339 weisen Befestigungselemente auf, die zur Befestigung der Magneteinheit 230 an dem Rotor-Segmentträger 310 vorgesehen sind.

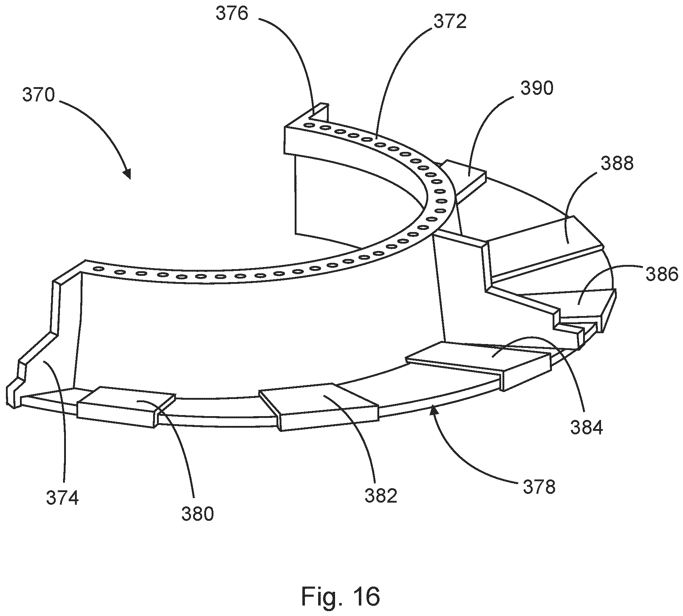

Figur 16 zeigt eine schematische, dreidimensionale Ansicht einer beispielhaften Ausführungsform eines Rotorgrundkörpers. Der Rotorgrundkörper 370 weist einen Rotorflansch 372 auf. Mit dem Rotorflansch 372 kann der Rotorgrundkörper 370 mit dem aerodynamischen Rotor 106 gekoppelt werden. Der Rotorgrundkörper 370 weist ferner den ersten Verbindungsflansch 374 und den zweiten Verbindungsflansch 376 auf. Die Verbindungsflansche 374, 376 sind vorgesehen, um den Rotorgrundkörper 370 mit einem weiteren Rotorgrundkörper zu verbinden, sodass ein ringförmiger Rotorgrundkörper ausgebildet wird. Der Rotorgrundkörper 370 weist darüber hinaus die Verbindungsstellen 380 bis 390 auf, an denen Rotor-Trageinheiten 350 von mehreren Rotorsegmenten 300 angeordnet werden.

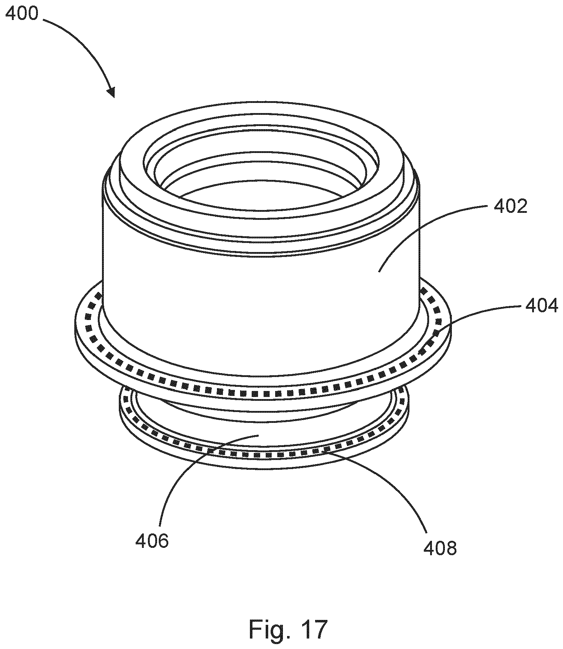

Figur 17 zeigt eine schematische Ansicht einer beispielhaften Ausführungsform eines Lagers 400. Das Lager 400 weist zwei miteinander gekoppelte und drehbar zueinander angeordnete Lagerteile 402, 406 auf. Das erste Lagerteil 402 weist den Rotorgrundkörperflansch 404 auf. An dem Rotorgrundkörperflansch 404 wird der Rotorgrundkörper 370 mit dem Rotorflansch 372 angeordnet und beispielsweise mittels Schrauben befestigt. Das zweite Lagerteil 406 weist den Statorgrundkörperflansch 408 auf. An dem Statorgrundkörperflansch 408 wird der Statorgrundkörper 270 angeordnet und beispielsweise mittels Schrauben befestigt. Durch das Lager 400 sind der Statorgrundkörper 270 und der Rotorgrundkörper 370 relativ zueinander drehbar. Infolgedessen sind auch die Rotorsegmente 300 relativ zu den Statorsegmenten 200 drehbar, sodass ein Generator ausgebildet wird, der elektrische Energie erzeugen kann.

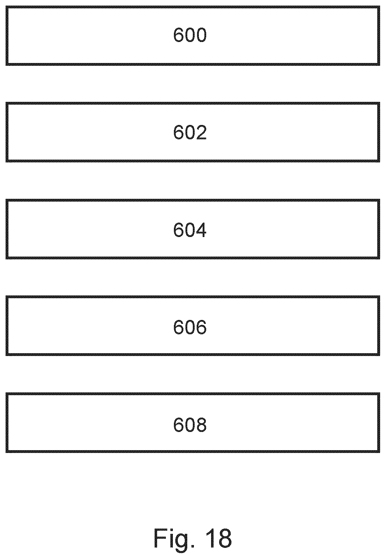

Figur 18 zeigt eine schematische Ansicht eines Verfahrens. In Schritt 600 werden zwei oder mehr Statorsegmente 200 und zwei oder mehr Rotorsegmente 300 bereitgestellt. In Schritt 602 werden die Statorsegmente 200 zu einem Statorring angeordnet und befestigt. Außerdem werden hier die Rotorsegmente 300 zu einem Rotorring angeordnet und befestigt. Die Anordnung des Statorrings und des Rotorrings erfolgt derart, dass die Spuleneinheiten 230, 232, 234 den Magneteinheiten 230, 232 zugewandt sind. Es ist insbesondere bevorzugt, dass je Statorsegment 200 ein Rotorsegment 300 angeordnet ist. Somit ist es möglich, dass ein Statorsegment 200 einem Rotorsegment 300 zugeordnet ist.

Danach wird in Schritt 604 ein Luftspalt 12 zwischen dem Statorring und dem Rotorring eingestellt. In Schritt 606 erfolgt die Demontage des Statorrings und des Rotorrings, wobei mindestens zwei Generatorsegmente 10 montiert bleiben, die jeweils mindestens ein Statorsegment 200 und ein Rotorsegment 300 aufweisen. Die Beabstandung der Spuleneinheit 230, 232, 234 zu der jeweiligen Magneteinheit 230, 232 eines jeden Generatorsegments 10 bleibt im Wesentlichen unverändert.

In Schritt 608 erfolgt die Montage der Generatorsegmente 10 an einem Aufstellort einer Windenergieanlage, sodass ein vollständiger Generator 1 montiert wird. In vorteilhafter Weise muss im Wesentlichen kein Luftspalt 12 eingestellt werden, da dieser jeweils für jedes einzelne Generatorsegment 10 eingestellt wurde und somit nach Montage der Generatorsegmente 10 zu dem Generator 1 keine Neueinstellung des Luftspalts 12 erforderlich ist.

### BEZUGSZEICHEN

- 1: Generator
- 10: Generatorsegment
- 12: Luftspalt
- 100: Windenergieanlage
- 102: Turm
- 104: Gondel
- 106: Rotor
- 108: Rotorblätter
- 110: Spinner
- 200: Statorsegment
- 210: Stator-Segmentträger
- 212: erstes Ende
- 214: zweites Ende
- 216: erste Trägerplatte
- 218: zweite Trägerplatte
- 220: Konturstrebe
- 222: Stator-Außenumfangsfläche
- 230: erste Spuleneinheit
- 231: Spulenträgerplatte
- 232: zweite Spuleneinheit
- 234: dritte Spuleneinheit
- 240,242: Flanschelemente
- 250: Stator-Trageinheit
- 252: proximaler Flansch
- 254: distaler Flansch
- 256: Gitterstruktur
- 258: Verbindungselement
- 260: Spule
- 262: erstes Spulenende
- 264: zweites Spulenende
- 266: erster Spulenschenkel
- 268: zweiter Spulenschenkel
- 270: Statorgrundkörper
- 272: Statorflansch
- 274-280: Verbindungsstellen
- 300: Rotorsegment
- 310: Rotor-Segmentträger
- 312: erstes Ende
- 314: zweites Ende
- 316: erste Kante
- 318: zweite Kante
- 320: Rotor-Innenumfangsfläche
- 330: erste Magneteinheit
- 332: zweite Magneteinheit
- 334: Magnetvorderfläche
- 336: Magnethinterfläche
- 338: erste Befestigungsreihe
- 339: zweite Befestigungsreihe
- 340: Versteifungsblech
- 350: Rotor-Trageinheit
- 370: Rotorgrundkörper
- 372: Rotorflansch
- 374: erster Verbindungsflansch
- 376: zweiter Verbindungsflansch
- 378: Rotorflanschkragen
- 380-390: Verbindungsstellen
- 400: Lager
- 402: erstes Lagerteil
- 404: Rotorgrundkörperflansch
- 406: zweites Lagerteil
- 408: Statorgrundkörperflansch

## Patentansprüche

1. Statorsegment (200) für einen segmentierten Stator eines Generators (1) einer Windenergieanlage (100), umfassend
- einen Stator-Segmentträger (210) mit einer teilringförmigen Geometrie und einer Stator-Umfangsfläche (222), insbesondere einer Stator-Außenumfangsfläche,
- mindestens zwei an der Stator-Umfangsfläche (222), insbesondere an der Stator-Außenumfangsfläche, des Stator-Segmentträgers (210) angeordnete Spuleneinheiten (230, 232, 234), wobei die Spuleneinheiten (230, 232, 234) jeweils eine Spulenträgerplatte (231) und mindestens eine auf der Spulenträgerplatte (231) angeordnete Spule (260) aufweisen.

2. Statorsegment (200) nach Anspruch 1, wobei der Stator-Segmentträger (210) an einer Stator-Trageinheit (250) angeordnet ist, die ausgebildet ist, um das Statorsegment (200) mit einem Statorgrundkörper zu verbinden, vorzugsweise schweißtechnisch zu verbinden, wobei vorzugsweise die Stator-Trageinheit (250) eine Gitterstruktur (256) umfasst oder als eine solche ausgebildet ist.

3. Statorsegment (200) nach einem der vorherigen Ansprüche, wobei an dem Stator-Segmentträger (210) zwischen zwei und vier, insbesondere drei, Spuleneinheiten (230, 232, 234) angeordnet sind.

4. Statorsegment (200) nach einem der vorherigen Ansprüche, wobei mindestens eine der Spulen (260) als eine Zahnspule ausgebildet ist, wobei vorzugsweise die Zahnspule (260) Aluminium umfasst oder aus Aluminium besteht.

5. Statorsegment (200) nach einem der vorherigen Ansprüche, wobei der Stator-Segmentträger (210) Durchbrüche aufweist und wobei vorzugsweise der Stator-Segmentträger (210) eine Gitterstruktur aufweist.

6. Rotorsegment (300) für einen segmentierten Rotor eines Generators (1) einer Windenergieanlage (100), umfassend
- einen Rotor-Segmentträger (310) mit einer Rotor-Umfangsfläche (320), insbesondere einer Rotor-Innenumfangsfläche,
- einer Vielzahl an Magneteinheiten (330, 332), die an der Rotor-Umfangsfläche (320), insbesondere an der Rotor-Innenumfangsfläche, des Rotor-Segmentträgers (310) angeordnet sind.

7. Rotorsegment (300) nach Anspruch 6, wobei der Rotor-Segmentträger (310) an einer Rotor-Trageinheit (350) angeordnet ist, die ausgebildet ist, um das Rotorsegment (300) mit einem Rotorgrundkörper zu verbinden, vorzugsweise schweißtechnisch zu verbinden, wobei vorzugsweise die Rotor-Trageinheit (350) als eine Gitterstruktur ausgebildet ist.

8. Rotorsegment (300) nach einem der vorherigen Ansprüche 6-7, wobei die Rotor-Umfangsfläche (320) des Rotor-Segmentträgers (310) als eine im Wesentlichen geschlossene Fläche ausgebildet ist.

9. Rotorsegment (300) nach einem der vorherigen Ansprüche 6-8, wobei sich die Rotor-Umfangsfläche (320) in einer Umfangsrichtung (U) und einer axialen Richtung (A) erstreckt, wobei mindestens zwei Magneteinheiten in axialer Richtung benachbart zueinander angeordnet sind.

10. Rotorsegment (300) nach einem der vorherigen Ansprüche 6-9, wobei eine, zwei, mehrere oder alle der Magneteinheiten (330, 332) als Permanentmagnet und/oder als Elektromagnet ausgebildet sind und/oder wobei eine, zwei oder mehrere der Magneteinheiten (330, 332) ein magnetisierbares Material umfassen oder aus diesem bestehen.

11. Generatorsegment (10) für einen Generator (1) einer Windenergieanlage (100), umfassend ein Statorsegment (200) nach einem der vorherigen Ansprüche 1-5 und ein Rotorsegment (300) nach einem der vorherigen Ansprüche 6-10, wobei vorzugsweise zwischen den Spuleneinheiten (230, 232, 234) und den Magneteinheiten (330, 332) ein Luftspalt (12) besteht und wobei ferner vorzugsweise das Statorsegment (200) und das Rotorsegment (300) relativ zueinander mittels mindestens eines Passstiftes fixiert sind.

12. Generator (1) für eine Windenergieanlage (100), umfassend zwei oder mehr Statorsegmente (200) nach einem der vorherigen Ansprüche 1-5 und zwei oder mehr Rotorsegmente (300) nach einem der vorherigen Ansprüche 6-10, wobei die Stator-Segmentträger (210) und die Rotor-Segmentträger (310) derart angeordnet sind, dass die Stator-Segmentträger (210) und die Rotor-Segmentträger (310) jeweils eine ringförmige Geometrie aufweisen, wobei sich zwischen den Spulen (260) und den Magneteinheiten (330, 332) ein Luftspalt (12) einstellt.

13. Generator (1) nach dem vorherigen Anspruch 12, umfassend zwischen 8 und 14, vorzugsweise zwischen 10 und 12, Statorsegmente (200) und/oder Rotorsegmente (300) .

14. Generator (1) nach einem der vorherigen Ansprüche 12-13,
- wobei die Anzahl an Statorsegmenten (200) und Rotorsegmenten (300) gleich ist und vorzugsweise jedem Statorsegment (200) ein Rotorsegment (300) zugeordnet ist, und
- wobei ferner vorzugsweise jeweils ein Statorsegment (200) und das zugeordnete Rotorsegment (300) im Wesentlichen die gleiche Umfangserstreckung in Bogengrad aufweisen.

15. Generator (1) nach einem der vorherigen Ansprüche 12-14,
- wobei die zwei oder mehr Stator-Segmentträger (210) an einem Statorgrundkörper (270) angeordnet sind, wobei der Statorgrundkörper (270) zur Kopplung mit einem Maschinenträger einer Windenergieanlage (100) ausgebildet ist, und/oder
- wobei die zwei oder mehr Rotor-Segmentträger (310) an einem Rotorgrundkörper (370) angeordnet sind, wobei der Rotorgrundkörper (370) zur Kopplung mit einem aerodynamischen Rotor ausgebildet ist.

16. Generator (1) nach einem der vorherigen Ansprüche 12-15, wobei der Statorgrundkörper (270) und/oder der Rotorgrundkörper (370) Ringscheiben-förmig ausgebildet sind, und vorzugsweise segmentiert ausgebildet sind, sodass zwei oder mehr Statorgrundkörpersegmente den Statorgrundkörper (270) ausbilden und/oder sodass zwei oder mehr Rotorgrundkörpersegmente den Rotorgrundkörper (370) ausbilden.

17. Generator (1) nach einem der vorherigen Ansprüche 12-16,
- wobei die zwei oder mehr Stator-Segmentträger (210) jeweils eine Stator-Trageinheit (250) aufweisen und die Stator-Trageinheiten (250) mit dem Statorgrundkörper (270) verbunden sind, vorzugsweise schweißtechnisch verbunden sind, und/oder
- wobei die zwei oder mehr Rotor-Segmentträger (310) jeweils eine Rotor-Trageinheit (350) aufweisen und die Rotortrageinheiten (350) mit dem Rotorgrundkörper (370) verbunden sind, vorzugsweise schweißtechnisch verbunden sind.

18. Generator (1) nach einem der vorherigen Ansprüche 12-17, umfassend eine Lagereinheit (400), wobei an der Lagereinheit (400) der Statorgrundkörper (270) und/oder der Rotorgrundkörper (370) drehfest angeordnet sind, sodass der Statorgrundkörper (270) und der Rotorgrundkörper (370) relativ zueinander drehbar sind.

19. Windenergieanlage (100), umfassend
- ein Statorsegment (200) nach einem der Ansprüche 1-5, und/oder
- ein Rotorsegment (300) nach einem der Ansprüche 6-10, und/oder
- ein Generatorsegment (10) nach Anspruch 11, und/oder
- einen Generator (1) nach einem der Ansprüche 12-18.

20. Verfahren zur Bereitstellung eines Generators (1) an einem Aufstellort einer Windenergieanlage (100), umfassend die Schritte:
- Bereitstellen von zwei oder mehr Statorsegmenten (200) nach einem der Ansprüche 1-5, Bereitstellen von zwei oder mehr Rotorsegmenten (300) nach einem der Ansprüche 6-10,
- Anordnen und Befestigen der Statorsegmente (200) zu einem Statorring und Anordnen und Befestigen der Rotorsegmente (300) zu einem Rotorring, wobei die Spuleneinheiten (230, 232, 234) den Magneteinheiten (330, 332) zugewandt sind und wobei vorzugsweise jeweils ein Statorsegment (200) einem Rotorsegment (300) zugeordnet ist,
- Einstellen eines Luftspalts zwischen dem Statorring und dem Rotorring,
- Demontage des Statorrings und des Rotorrings, wobei mindestens zwei Generatorsegmente montiert bleiben, die jeweils mindestens ein Statorsegment (200) und ein Rotorsegment (300) aufweisen und wobei jeweils die Beabstandung der Spuleneinheit zu der Magneteinheit eines jeden Generatorsegments im Wesentlichen unverändert bleibt, und
- Montage der Generatorsegmente an einem Aufstellort einer Windenergieanlage (100).
